# EUROPEAN PATENT SPECIFICATION

(11) **EP 3 901 426 B1**
(45) Date of publication and mention of the grant of the patent: **25.10.2023**
(21) Application number: 18943790.8
(22) Date of filing: 21.12.2018
(51) Int. Cl.: F01L 1/14, F01L 13/00, F01L 1/18, F01L 1/245

(54) **VALVE TRAIN AND ENGINE**
VENTILTRIEB UND MOTOR
DISPOSITIF DE COMMANDE DES SOUPAPES ET MOTEUR

(43) Date of publication of application: 27.10.2021
(73) Proprietor: Weichai Power Co., Ltd., Weifang, Shandong 261061 (CN)
(72) Inventor: JIA, Demin, Weifang, Shandong 261061 (CN); WANG, Xiaoyan, Weifang, Shandong 261061 (CN); LI, Zhijie, Weifang, Shandong 261061 (CN); ZHAN, Qiang, Weifang, Shandong 261061 (CN); WANG, Bo, Weifang, Shandong 261061 (CN)
(74) Representative: Pfenning, Meinig & Partner mbB
(86) International application number: PCT/CN2018/122666
(87) International publication number: WO 2020/124554

(56) References cited:
- WO-A1-2014/106689
- CN-A- 108 661 744
- CN-U- 206 707 788

## Description

### TECHNICAL FIELD

The present disclosure relates to the field of engines, for example, a valve train and an engine.

### BACKGROUND

A valve train is an important part of an engine. The main function of the valve train is to regularly open and close intake valves and exhaust valves of multiple cylinders according to the operation sequence and operation cycle requirements of the engine so that fresh gas enters the cylinders and exhaust gas is discharged from the cylinders.

The valve train mainly includes two types of valve trains, that is, a valve train with a fixed valve phase and a valve train with variable valve strokes. Parameters of the valve train with the fixed valve phase, such as opening time, a phase, and a lift range, are fixed so that the requirements for the valve lift range in conditions of different rotation speeds and load rates cannot be satisfied, and thus the further improvement of diesel engine thermal efficiency is limited.

In the valve train with variable valve strokes, a pressure relief device is added to a valve drive chain, and the valve drive chain loses power in a timely manner so that early valve closing is achieved. However, in the preceding manner, due to the loss of a buffer function of a camshaft buffer section, a relative large valve seated speed is generated, and then relative large noise is generated when the valve is seated.

CN 206 707 788 U describes a valve adjustment device with a upper tappet body attached to a push rod, wherein the upper tappet body is configured to control the openings of oil ducts connected to a hydraulic fluid chamber formed between the upper tappet body and a lower tappet body.

### SUMMARY

The present disclosure provides a valve train and an engine so that the problem of a relatively large valve seated speed due to the loss of a buffer function of a camshaft buffer section in the case where the valve train operates in an early valve closing mode can be solved.

Provided is a valve train, including a housing, a rocker arm plunger, a valve push rod component, a pressure chamber, and a buffer component. The housing is provided with a through hole, an oil inlet channel, an oil drain channel, and an oil supplement channel, and the oil inlet channel, the oil drain channel, and the oil supplement channel all are in communication with the through hole. The rocker arm plunger is disposed in the through hole. One end of the valve push rod component is disposed in the through hole. The pressure chamber is disposed between the rocker arm plunger and the valve push rod component, and the valve push rod component is configured to push the rocker arm plunger to move axially along the through hole so that the pressure chamber is selectively in communication with the oil inlet channel, the oil drain channel, and the oil supplement channel. The buffer component is configured to supplement oil to the pressure chamber through the oil supplement channel before the valve push rod component moves to a bottom dead center so that a seated speed of a valve is buffered.

An embodiment further provides an engine, which includes the preceding valve train.

### BRIEF DESCRIPTION OF DRAWINGS

FIG. 1 is a schematic view of a valve train according to an embodiment of the present application; and
FIG. 2 is a partial structure view of FIG. 1.

### Reference list

- 10: rocker arm
- 1: valve push rod
- 2: housing
- 20: through hole
- 21: oil inlet channel
- 22: oil drain channel
- 23: oil supplement channel
- 24: seated orifice
- 25: oil inlet chamber
- 31: rocker arm plunger
- 311: pressure chamber
- 3111: perforated hole
- 3112: first hole
- 3113: second hole
- 32: push rod plunger
- 321: push rod plunger body
- 322: tappet piston
- 33: piston elastic member
- 41: accumulating chamber
- 42: accumulating piston
- 43: accumulating elastic member
- 51: switch valve
- 52: oil drain check valve
- 53: oil inlet check valve
- 54: oil supplement check valve
- 6: tappet
- 7: cam

### DETAILED DESCRIPTION

This embodiment discloses a valve train so that the problem of a fast valve seated speed during an early valve closing process can be solved. This embodiment further provides an engine.

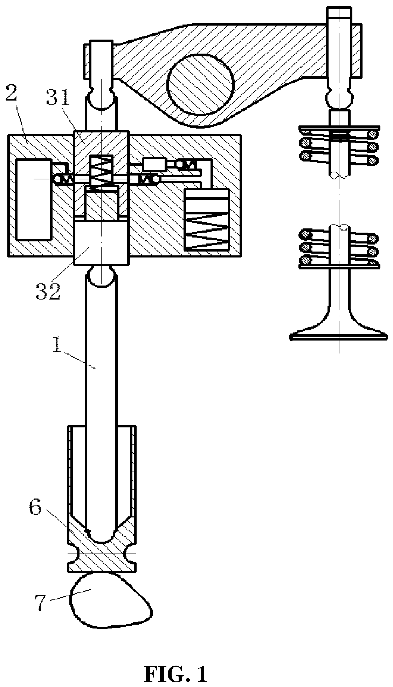

FIG. 1 is a structure diagram of a valve train in this embodiment. The valve train includes a tappet 6, a cam 7 that drives the tappet 6 up and down, a valve push rod component that is driven up and down by the tappet 6, a housing 2, a rocker arm plunger 31, and a buffer component.

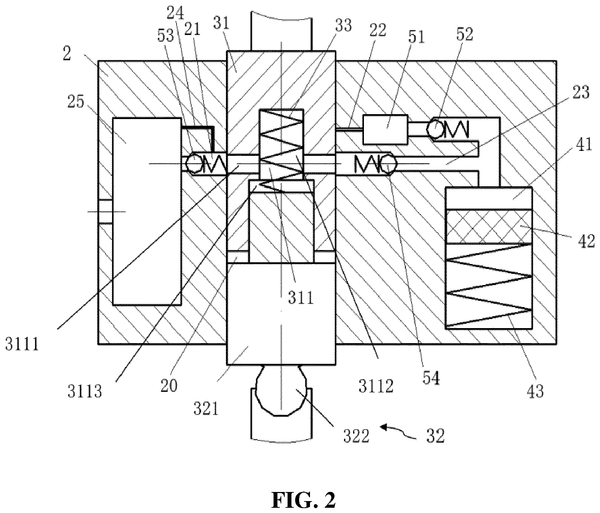

As shown in FIG. 2, the housing 2 is provided with a through hole 20, an oil inlet channel 21, an oil drain channel 22, and an oil supplement channel 23, and the oil inlet channel 21, the oil drain channel 22, and the oil supplement channel 23 all are in communication with the through hole 20. The oil inlet channel 21 is in communication with an oil inlet chamber 25 disposed on the housing 2, the oil inlet chamber 25 is provided with an oil inlet, and the oil drain channel 22 is provided with a switch valve 51. In the case where the switch valve 51 is closed, a valve of the engine is in a normal closing mode; in the case where the switch valve 51 is opened, the valve of the engine is in an early closing mode. That is, the two operation modes of the valve are achieved by opening and closing the switch valve 51.

A pressure chamber 311 is disposed between the rocker arm plunger 31 and the valve push rod component. The rocker arm plunger 31 is inserted into the through hole 20 from a first end of the through hole 20, and the valve push rod component is inserted into the through hole 20 from a second end of the through hole 20. The valve push rod component can push the rocker arm plunger 31 to move axially along the through hole 20 so that the pressure chamber 311 is selectively in communication with the oil inlet channel 21, the oil drain channel 22, and the oil supplement channel 23, and then a rocker arm 10 is driven by the rocker arm plunger 31 to drive the valve to make corresponding movements.

In this embodiment, the pressure chamber 311 includes a stepped counterbore disposed axially along the rocker arm plunger 31, and a perforated hole 3111 disposed radially along the rocker arm plunger 31 and in communication with the stepped counterbore, and a central axis of the stepped counterbore coincides with a central axis of the rocker arm plunger 31. The stepped counterbore is disposed at the first end of the through hole 20 and includes a first hole 3112 and a second hole 3113, where an inner diameter of the first hole 3112 is less than an inner diameter of the second hole 3113, and the perforated hole 3111 is disposed through the first hole 3112. In an embodiment, the pressure chamber 311 is not limited to the preceding structure and may also be in other forms as long as it is ensured that the pressure chamber 311 can be selectively in communication with the oil inlet channel 21, the oil drain channel 22, and the oil supplement channel 23 during the rocker arm plunger 31 moving axially.

The valve push rod component includes a valve push rod 1 and a push rod plunger 32, where a first end of the push rod plunger 32 is connected to the valve push rod 1, and a second end of the push rod plunger 32 is inserted into the second hole 3113. In the case where the push rod plunger 32 moves axially relative to the rocker arm plunger 31, the volume of the pressure chamber 311 changes, and then the pressure in the pressure chamber 311 changes. In an embodiment, the push rod plunger 32 includes a push rod plunger body 321 and a tappet piston 322 disposed at one end of the push rod plunger body 321, where a free end of the tappet piston 322 is inserted into the second hole 3113 so that the push rod plunger body 321 is capable of abutting against an end surface of the rocker arm plunger 31. In addition, the outer diameter of the tappet piston 322 is greater than the inner diameter of the first hole 3112.

The pressure chamber 311 is provided with a piston elastic member 33. In the case where the valve push rod 1 reciprocates, the piston elastic member 33 is capable of being compressed to provide an axial movement force for the rocker arm plunger 31 or the push rod plunger 32. In this embodiment, the piston elastic member 33 is a spring, a first end of the piston elastic member 33 abuts against an inner wall of the pressure chamber 311, and a second end of the piston elastic member 33 abuts against the push rod plunger 32.

If the switch valve 51 is in an opening state, during the valve push rod 1 moving from a bottom dead center to a top dead center, the valve push rod 1 pushes the push rod plunger 32 to move axially so that the oil pressure in the pressure chamber 311 increases, and then the rocker arm plunger 31 is pushed to move axially toward one side where the rocker arm 10 is located. When the pressure chamber 311 is in communication with the oil drain channel 22, the valve push rod 1 pushes the push rod plunger 32 to continue to move axially toward the side where the rocker arm 10 is located. In this case, the hydraulic oil in the pressure chamber 311 is discharged through the oil drain channel 22 so that the oil pressure in the pressure chamber 311 decreases, and thus the pressure oil in the pressure chamber 311 is not enough to push the rocker arm plunger 31 to continue to move toward the side where the rocker arm 10 is located, and then the rocker arm plunger 31 is kept at a current position. During the push rod plunger 32 continuing to move toward the side where the rocker arm 10 is located until the cam 7 moves to the top dead center, the push rod plunger 32 continues to move toward the side where the rocker arm 10 is located so that the volume of the pressure chamber 311 decreases continuously, and thus the hydraulic oil in the pressure chamber 31 is continuously discharged through the oil drain channel 22; during this process, the movement of the valve push rod 1 within a preset lift range does not affect the rocker arm plunger 31, and the valve position in the preset lift range does not change.

In an embodiment, the oil supplement channel 22 is an orifice. The orifice can avoid the following case: at the moment when the pressure chamber 311 is in communication with the oil drain channel 22, the pressure in the pressure chamber 311 drops too much, causing the push rod plunger 32 to impact the rocker arm plunger 21.

In this embodiment, the buffer component supplements oil to the pressure chamber 311 through the oil supplement channel 23, and the buffer component is configured to buffer the seated speed of a valve. In an embodiment, the buffer component includes an accumulator in communication with both the oil drain channel 22 and the oil supplement channel 23. In the case where the switch valve 51 is in the opening state and the pressure chamber 311 is in communication with the oil drain channel 22, the hydraulic oil in the pressure chamber 311 flows back into the accumulator through the oil drain channel 22; in the case where the pressure chamber 311 is in communication with the oil supplement channel 23, the accumulator is capable of supplementing oil to the pressure chamber 311 through the oil supplement channel 23.

The preceding accumulator includes an accumulating chamber 41, an accumulating piston 42, and an accumulating elastic member 43, where the accumulating chamber 41 is disposed on the housing 2, and the accumulating chamber 41 is provided with an oil port in communication with the oil supplement channel 23 and the oil drain channel 22. The accumulating piston 42 is disposed in the accumulating chamber 41. In an embodiment, the accumulating elastic member 43 is a spring, the accumulating elastic member 43 is located on a first side of the accumulating piston 42, the oil port is located on a second side of the accumulating piston 42, and the accumulating elastic member 43 is capable of driving the accumulating piston 42 to reciprocate in the accumulating chamber 41.

In an early valve closing mode, during the valve push rod 1 moving from the top dead center to the bottom dead center, the pressure chamber 311 is in communication with the oil supplement channel 23, and the buffer component supplements oil to the pressure chamber 311 through the oil supplement channel 23 so that the oil pressure in the pressure chamber 311 increases, then the movement speed of the rocker arm plunger 31 is reduced, and thus the seated speed of valve can be buffered and the noise generated when the valve is seated can be reduced.

In this embodiment, a buffer component is configured to supplement oil to the pressure chamber 311 through the oil supplement channel 22. In the case where the oil pressure in the oil inlet chamber 25 is higher than the oil pressure in the pressure chamber 311, the oil inlet chamber 25 may also be configured to supplement oil to the pressure chamber 311 through oil inlet channel 21. In an embodiment, the oil supplement channel 23 and the oil inlet channel 21 are capable of communicating with the pressure chamber 311 simultaneously. Of course, it is not limited to the preceding manner. The oil supplement channel 23 and the oil inlet channel 21 may also be disposed in an axially offset manner along the through hole 20 and cannot communicate with the pressure chamber 311 simultaneously. However, during the actual operation, since the pressure in the oil inlet chamber 25 is extremely unstable and is relatively low, the oil inlet chamber 25 is configured to supplement oil to the pressure chamber 311 only in the case where the oil pressure in the pressure chamber 311 is insufficient due to the loss of hydraulic oil so that the oil pressure used for completing the valve lift movement can be ensured.

To prevent hydraulic oil from entering the oil supplement channel 23 when the oil is supplemented to the pressure chamber 311 through the oil inlet channel 21, an oil supplement check valve 54 capable of being opened along an oil supplement direction is disposed in the oil supplement channel 23. To prevent hydraulic oil from entering the oil inlet channel 21 when the oil is supplemented to the pressure chamber 311 through the oil supplement channel 23, an oil inlet check valve 53 capable of being opened along an oil inlet direction is disposed in the oil inlet channel 21. To make the oil pressure in the pressure chamber 311 less than the oil pressure in the buffer component during a pressure relief process, the hydraulic oil in the buffer component does not enter the pressure chamber 311 through the oil drain channel 22, an oil drain check valve 52 capable of being opened along an oil drain direction is disposed on the oil drain channel 22, and the oil drain check valve 52 is disposed between the switch valve 51 and the buffer component.

The valve train provided in this embodiment can achieve an early valve closing mode and a normal valve closing mode. The operation processes of the two modes are described below.

In the normal valve closing mode, the switch valve 51 is always in a closed state. During the valve push rod 1 moving from the bottom dead center toward the top dead center, the valve push rod 1 pushes the push rod plunger 32 to move axially relative to the rocker arm plunger 31, the piston elastic member 33 is gradually compressed, and then the rocker arm plunger 31 moves axially under the action of the piston elastic member 33 and the oil pressure in the pressure chamber 311. During the valve push rod 1 moving from the top dead center toward the bottom dead center, the top of the rocker arm plunger 31 is pressed, the rocker arm plunger 31 moves, and the push rod plunger 32 moves axially under the action of the piston elastic member 33.

In the early valve closing mode, the switch valve 51 is always in an opening state. During the valve push rod 1 moving from the bottom dead center toward the top dead center, the valve push rod 1 pushes the push rod plunger 32 to move axially relative to the rocker arm plunger 31, the pressure in the pressure chamber 311 increases, the piston elastic member 33 is gradually compressed, and then the rocker arm plunger 31 moves axially under the action of the piston elastic member 33 and the oil pressure in the pressure chamber 311. When the pressure chamber 311 is in communication with the oil drain channel 22 and the oil pressure in the pressure chamber 311 is greater than the oil pressure in the accumulating chamber 41, the oil drain check valve 52 is opened, the hydraulic oil in the pressure chamber 311 flows into the accumulating chamber 41 through the oil drain channel 22, the oil pressure in the pressure chamber 311 gradually decreases, and the accumulating piston 42 compresses the accumulating elastic member 43 so that the accumulating elastic member 43 is compressed. When the oil pressure in the pressure chamber 311 is equal to the oil pressure in the accumulating chamber 41, the oil drain check valve 52 is closed, and the cam 7 moves to the top dead center.

As the cam 7 continues to rotate, the valve push rod 1 moves toward the bottom dead center, the top of the rocker arm plunger 31 is pressed so that an axial movement between the rocker arm plunger 31 and the through hole 20 is produced, and the push rod plunger 32 loses the thrust of the valve push rod 1. Under the action of the elastic force of the piston elastic member 33, the push rod plunger 32 moves axially, and an axial movement between the rocker arm plunger 31 and the push rod plunger 32 is produced. As the valve push rod 1 gradually approaches the bottom dead center, the elastic force of the piston elastic member 33 gradually decreases, and the pressure in the pressure chamber 311 gradually decreases.

Before the valve push rod 1 moves to the bottom dead center and when the pressure chamber 311 is in communication with the oil supplement channel 23, the oil pressure in the accumulating chamber 41 is greater than the oil pressure in the pressure chamber 311, and the hydraulic oil in the accumulating chamber 41 enters the pressure chamber 311 through the oil supplement channel 23. At the same time, in the case where the oil pressure in the oil inlet chamber 25 is higher than the oil pressure in the pressure chamber 311, the hydraulic oil in the oil inlet chamber 25 enters the pressure chamber 311 through the oil inlet channel 21 so that the oil pressure in the pressure chamber 311 increases, the movement speed of the rocker arm plunger 31 is reduced, and thus the seated speed of the valve can be buffered; and the accumulating elastic member 43 can push the accumulating piston 42 to gradually reset.

Whether it is in the early valve closing mode or the normal valve closing mode, hydraulic oil loss during the entire movement exists. In the case where the oil pressure in the pressure chamber 311 is insufficient due to the loss of hydraulic oil, the oil inlet chamber 25 is configured to supplement oil to the pressure chamber 311.

The housing 2 is provided with a seated orifice 24, where the seated orifice 24 and the oil inlet check valve 53 are connected in parallel, a first end of the seated orifice 24 is in communication with the oil inlet channel 21, and a second end of the seated orifice 24 is in communication with the oil inlet chamber 25. In an embodiment, the first end of the seated orifice 24 is in communication with the oil inlet chamber 25, the second end of the seated orifice 24 is in communication with the oil inlet channel 21, and a position where the seated orifice 24 is in communication with the oil inlet channel 21 is located downstream of the oil inlet check valve 53. In the case where the oil is supplemented to the pressure chamber 311 through the oil inlet channel 21, if the pressure in the pressure chamber 311 is too high, the hydraulic oil in the pressure chamber 311 is capable of flowing back through the seated orifice 24 so that the following case can be avoided: the pressure in the pressure chamber 311 is too high to affect the movement of the rocker arm plunger 31.

The engine provided in this embodiment includes the preceding valve train. Through the valve train, the normal valve closing mode and the early valve closing mode can be achieved, and the problem of a relatively large valve seated speed in the early valve closing mode can be solved.

## Claims

1. A valve train, **characterized by** comprising:
a housing (2) provided with a through hole (20), an oil inlet channel (21), an oil drain channel (22), and an oil supplement channel (23), wherein the oil inlet channel (21), the oil drain channel (22), and the oil supplement channel (23) all are in communication with the through hole (20);
a rocker arm plunger (31) disposed in the through hole (20);
a valve push rod component (1, 32), wherein one end of the valve push rod component is disposed in the through hole (20);
a pressure chamber (311) disposed between the rocker arm plunger (31) and the valve push rod component, wherein the valve push rod component is configured to push the rocker arm plunger (31) to move axially along the through hole (20) so that the pressure chamber (311) is selectively in communication with the oil inlet channel (21), the oil drain channel (22), and the oil supplement channel (23); and
a buffer component configured to supplement oil to the pressure chamber (311) through the oil supplement channel (23) before the valve push rod component moves to a bottom dead center so that a seated speed of a valve is buffered.

2. The valve train of claim 1, wherein the valve push rod component comprises:
a valve push rod (1); and
a push rod plunger (32), wherein a first end of the push rod plunger (32) is connected to the valve push rod (1), a second end of the push rod plunger (32) is disposed in the through hole (20) and forms the pressure chamber (311) with the rocker arm plunger (31), and the push rod plunger (32) is movable axially relative to the rocker arm plunger (31).

3. The valve train of claim 2, wherein the valve push rod component further comprises a piston elastic member (33) disposed in the pressure chamber (311) and configured to push the push rod plunger (32) to move axially, wherein a first end of the piston elastic member (33) abuts against the rocker arm plunger (31), and a second end of the piston elastic member (33) abuts against the push rod plunger (32).

4. The valve train of claim 1, wherein the buffer component comprises an accumulator in communication with both the oil drain channel (22) and the oil supplement channel (23); and the pressure chamber (311) is configured, in a case where the pressure chamber (311) is in communication with the oil drain channel (22), enable hydraulic oil in the pressure chamber (311) to flow into the accumulator through the oil drain channel (22); and the accumulator is configured to, in a case where the pressure chamber (311) is in communication with the oil supplement channel (23), supplement the oil to the pressure chamber (311) through the oil supplement channel (23).

5. The valve train of claim 4, wherein the accumulator comprises:
an accumulating chamber (41) disposed on the housing (2), wherein the accumulating chamber (41) is provided with an oil port in communication with the oil supplement channel (23) and the oil drain channel (22);
an accumulating piston (42) disposed in the accumulating chamber (41); and
an accumulating elastic member (43) located on a first side of the accumulating piston (42), wherein the oil port is located on a second side of the accumulating piston (42), and the accumulating elastic member (43) is configured to drive the accumulating piston (42) to reciprocate in the accumulating chamber (41).

6. The valve train of claim 1, wherein the oil drain channel (22) is provided with a switch valve (51); the valve is configured to be in a normal closing mode in a case where the switch valve (51) is closed and is configured to be in an early closing mode in a case where the switch valve (51) is opened.

7. The valve train of claim 6, further comprising an oil drain check valve (52) disposed in the oil drain channel (22) and capable of being opened along an oil drain direction, wherein the oil drain check valve (52) is disposed between the switch valve (51) and the buffer component.

8. The valve train of any one of claims 1 to 7, wherein the oil supplement channel (23) and the oil inlet channel (21) are configured to communicate with the pressure chamber (311) simultaneously; and
the valve train further comprises an oil inlet check valve (53) disposed in the oil inlet channel (21) and capable of being opened along an oil inlet direction, and an oil supplement check valve (54) disposed in the oil supplement channel (23) and capable of being opened along an oil supplement direction.

9. The valve train of claim 8, wherein the housing (2) is provided with a seated orifice (24), wherein the seated orifice (24) and the oil inlet check valve (53) are connected in parallel, and one end of the seated orifice (24) is in communication with the oil inlet channel (21).

10. The valve train of any one of claims 1 to 7, wherein the oil drain channel (22) is an orifice.

11. An engine, comprising the valve train of any one of claims 1 to 10.

## Patentansprüche

1. Ein Ventiltrieb, **dadurch gekennzeichnet, dass** er umfasst:
ein Gehäuse (2), das mit einem Durchgangsloch (20), einem Öleinlasskanal (21), einem Ölablaufkanal (22) und einem Ölzufuhrkanal (23) versehen ist, wobei der Öleinlasskanal (21), der Ölablaufkanal (22) und der Ölzufuhrkanal (23) alle in Verbindung mit dem Durchgangsloch (20) stehen;
ein in dem Durchgangsloch (20) angeordneten Kipphebeldruckstück (31);
eine Ventilschubstangenkomponente (1, 32),
wobei ein Ende der Ventilschubstangenkomponente in dem Durchgangsloch (20) angeordnet ist;
eine Druckkammer (311), die zwischen dem Kipphebeldruckstück (31) und der Ventilschubstangenkomponente angeordnet ist, wobei die Ventilschubstangenkomponente eingerichtet ist, das Kipphebeldruckstück (31) so zu drücken, dass es sich axial entlang des Durchgangslochs (20) bewegt, so dass die Druckkammer (311) selektiv mit dem Öleinlasskanal (21), dem Ölablaufkanal (22) und dem Ölzufuhrkanal (23) in Verbindung steht; und
eine Pufferkomponente, die eingerichtet ist, der Druckkammer (311) durch den Ölzufuhrkanal (23) Öl zuzuführen, bevor sich die Ventilschubstangenkomponente zu einem unteren Totpunkt bewegt, so dass eine Sitzgeschwindigkeit eines Ventils gepuffert wird.

2. Ventiltrieb nach Anspruch 1, wobei die Ventilschubstangenkomponente umfasst:
eine Ventilschubstange (1); und
ein Schubstangendruckstück (32), wobei ein erstes Ende des Schubstangendruckstücks (32) mit der Ventilschubstange (1) verbunden ist, ein zweites Ende des Schubstangendruckstücks (32) in dem Durchgangsloch (20) angeordnet ist und mit dem Kipphebeldruckstück (31) die Druckkammer (311) bildet, und das Schubstangendruckstück (32) relativ zum Kipphebeldruckstück (31) axial beweglich ist.

3. Ventiltrieb nach Anspruch 2, wobei die Ventilschubstangenkomponente ferner ein elastisches Kolbenelement (33) umfasst, das in der Druckkammer (311) angeordnet und eingerichtet ist, das Schubstangendruckstück (32) zu drücken, um sich axial zu bewegen, wobei ein erstes Ende des elastischen Kolbenelements (33) an dem Kipphebeldruckstück (31) anliegt und ein zweites Ende des elastischen Kolbenelements (33) an dem Schubstangendruckstück (32) anliegt.

4. Ventiltrieb nach Anspruch 1, wobei die Pufferkomponente einen Akkumulator umfasst, der sowohl mit dem Ölablaufkanal (22) als auch mit dem Ölzufuhrkanal (23) in Verbindung steht; und die Druckkammer (311) eingerichtet ist, in einem Fall, in dem die Druckkammer (311) mit dem Ölablaufkanal (22) in Verbindung steht, zu ermöglichen, dass Hydrauliköl in der Druckkammer (311) durch den Ölablaufkanal (22) in den Akkumulator fließt; und der Akkumulator eingerichtet ist, in einem Fall, in dem die Druckkammer (311) mit dem Ölzufuhrkanal (23) in Verbindung steht, das Öl durch den Ölzufuhrkanal (23) in die Druckkammer (311) zu leiten.

5. Ventiltrieb nach Anspruch 4, wobei der Akkumulator umfasst:
eine am Gehäuse (2) angeordnete Akkumulatorkammer (41), wobei die Akkumulatorkammer (41) mit einem Ölanschluss versehen ist, der mit dem Ölzufuhrkanal (23) und dem Ölablaufkanal (22) in Verbindung steht;
einen in der Akkumulatorkammer (41) angeordneten Akkumulatorkolben (42); und
ein elastisches Akkumulatorelement (43), das auf einer ersten Seite des Akkumulatorkolbens (42) angeordnet ist, wobei der Ölanschluss auf einer zweiten Seite des Akkumulatorkolbens (42) angeordnet ist und das elastische Akkumulatorelement (43) eingerichtet ist, den Akkumulatorkolben (42) zu einer Hin- und Herbewegung in der Ackumulatorkammer (41) anzutreiben.

6. Ventiltrieb nach Anspruch 1, wobei der Ölablaufkanal (22) mit einem Schaltventil (51) versehen ist; das Ventil ist eingerichtet, sich in einem normalen Schließmodus zu befinden, wenn das Schaltventil (51) geschlossen ist, und sich in einem frühen Schließmodus zu befinden, wenn das Schaltventil (51) geöffnet ist.

7. Ventiltrieb nach Anspruch 6, der ferner ein Ölablauf-Rückschlagventil (52) umfasst, das in dem Ölablaufkanal (22) angeordnet ist und entlang einer Ölablaufrichtung geöffnet werden kann, wobei das Ölablauf-Rückschlagventil (52) zwischen dem Schaltventil (51) und der Pufferkomponente angeordnet ist.

8. Ventiltrieb nach einem der Ansprüche 1 bis 7, wobei der Ölzufuhrkanal (23) und der Öleinlasskanal (21) eingerichtet sind, gleichzeitig mit der Druckkammer (311) in Verbindung zu stehen; und
der Ventiltrieb ferner ein Öleinlass-Rückschlagventil (53) umfasst, das in dem Öleinlasskanal (21) angeordnet ist und entlang einer Öleinlassrichtung geöffnet werden kann, und ein Ölzufuhr-Rückschlagventil (54), das in dem Ölzufuhrkanal (23) angeordnet ist und entlang einer Ölzufuhrrichtung geöffnet werden kann.

9. Ventiltrieb nach Anspruch 8, wobei das Gehäuse (2) mit einer sitzenden Öffnung (24) versehen ist, wobei die sitzende Öffnung (24) und das Öleinlass-Rückschlagventil (53) parallel geschaltet sind und ein Ende der sitzenden Öffnung (24) mit dem Öleinlasskanal (21) in Verbindung steht.

10. Ventiltrieb nach einem der Ansprüche 1 bis 7, wobei der Ölablaufkanal (22) eine Öffnung ist.

11. Motor, umfassend den Ventiltrieb nach einem der Ansprüche 1 bis 10.

## Revendications

1. Dispositif de commande de soupape, **caractérisé en ce qu'**il comprend :
un logement (2) qui est muni d'un trou traversant (20), d'un canal d'entrée d'huile (21), d'un canal de drainage d'huile (22) et d'un canal de supplémentation en huile (23), dans lequel le canal d'entrée d'huile (21), le canal de drainage d'huile (22) et le canal de supplémentation en huile (23) sont tous en communication avec le trou traversant (20) ;
un plongeur de culbuteur (31) qui est disposé dans le trou traversant (20) ;
un composant de tige poussoir de soupape (1, 32),
dans lequel une extrémité du composant de tige poussoir de soupape est disposée dans le trou traversant (20) ;
une chambre de pression (311) qui est disposée entre le plongeur de culbuteur (31) et le composant de tige poussoir de soupape, dans lequel le composant de tige poussoir de soupape est configuré pour pousser le plongeur de culbuteur (31) afin qu'il soit déplacé axialement le long du trou traversant (20) de telle sorte que la chambre de pression (311) soit de façon sélective en communication avec le canal d'entrée d'huile (21), le canal de drainage d'huile (22) et le canal de supplémentation en huile (23) ; et
un composant tampon qui est configuré pour assurer une supplémentation en huile sur la chambre de pression (311) au travers du canal de supplémentation en huile (23) avant que le composant de tige poussoir de soupape ne soit déplacé jusqu'à un cul-de-sac de telle sorte qu'une vitesse en siège d'une soupape soit tamponnée.

2. Dispositif de commande de soupape selon la revendication 1, dans lequel le composant de tige poussoir de soupape comprend :
une tige poussoir de soupape (1) ; et
un plongeur de tige poussoir (32), dans lequel une première extrémité du plongeur de tige poussoir (32) est connectée à la tige poussoir de soupape (1), une seconde extrémité du plongeur de tige poussoir (32) est disposée dans le trou traversant (20) et forme la chambre de pression (311) avec le plongeur de culbuteur (31), et le plongeur de tige poussoir (32) peut être déplacé axialement par rapport au plongeur de culbuteur (31).

3. Dispositif de commande de soupape selon la revendication 2, dans lequel le composant de tige poussoir de soupape comprend en outre un élément élastique de piston (33) qui est disposé dans la chambre de pression (311) et qui est configuré pour pousser le plongeur de tige poussoir (32) de telle sorte qu'il soit déplacé axialement, dans lequel une première extrémité de l'élément élastique de piston (33) vient en butée contre le plongeur de culbuteur (31) et une seconde extrémité de l'élément élastique de piston (33) vient en butée contre le plongeur de tige poussoir (32).

4. Dispositif de commande de soupape selon la revendication 1, dans lequel le composant tampon comprend un accumulateur en communication avec à la fois le canal de drainage d'huile (22) et le canal de supplémentation en huile (23) ; et la chambre de pression (311) est configurée pour, dans le cas où la chambre de pression (311) est en communication avec le canal de drainage d'huile (22), permettre l'écoulement d'huile hydraulique dans la chambre de pression (311) à l'intérieur de l'accumulateur au travers du canal de drainage d'huile (22) ; et l'accumulateur est configuré pour, dans le cas où la chambre de pression (311) est en communication avec le canal de supplémentation en huile (23), assurer une supplémentation en huile sur la chambre de pression (311) au travers du canal de supplémentation en huile (23).

5. Dispositif de commande de soupape selon la revendication 4, dans lequel l'accumulateur comprend :
une chambre d'accumulation (41) qui est disposée sur le logement (2), dans lequel la chambre d'accumulation (41) est munie d'un orifice d'huile en communication avec le canal de supplémentation en huile (23) et le canal de drainage d'huile (22) ;
un piston d'accumulation (42) qui est disposé dans la chambre d'accumulation (41) ; et
un élément élastique d'accumulation (43) qui est localisé sur un premier côté du piston d'accumulation (42), dans lequel l'orifice d'huile est localisé sur un second côté du piston d'accumulation (42), et l'élément élastique d'accumulation (43) est configuré pour entraîner le piston d'accumulation (42) selon un déplacement en va-et-vient dans la chambre d'accumulation (41).

6. Dispositif de commande de soupape selon la revendication 1, dans lequel le canal de drainage d'huile (22) est muni d'une soupape de commutation (51) ; la soupape est configurée pour être dans un mode de fermeture normale dans le cas où la soupape de commutation (51) est fermée et est configurée pour être dans un mode de fermeture précoce dans le cas où la soupape de commutation (51) est ouverte.

7. Dispositif de commande de soupape selon la revendication 6, comprenant en outre une soupape de contrôle et de retenue de drainage d'huile (52) qui est disposée dans le canal de drainage d'huile (22) et qui peut être ouverte suivant une direction de drainage d'huile, dans lequel la soupape de contrôle et de retenue de drainage d'huile (52) est disposée entre la soupape de commutation (51) et le composant tampon.

8. Dispositif de commande de soupape selon l'une quelconque des revendications 1 à 7, dans lequel le canal de supplémentation en huile (23) et le canal d'entrée d'huile (21) sont configurés pour communiquer simultanément avec la chambre de pression (311) ; et
le dispositif de commande de soupape comprend en outre une soupape de contrôle et de retenue d'entrée d'huile (53) qui est disposée dans le canal d'entrée d'huile (21) et qui peut être ouverte suivant une direction d'entrée d'huile, et une soupape de contrôle et de retenue de supplémentation en huile (54) qui est disposée dans le canal de supplémentation en huile (23) et qui peut être ouverte suivant une direction de supplémentation en huile.

9. Dispositif de commande de soupape selon la revendication 8, dans lequel le logement (2) est muni d'un orifice en siège (24), dans lequel l'orifice en siège (24) et la soupape de contrôle et de retenue d'entrée d'huile (53) sont connectés en parallèle, et une extrémité de l'orifice en siège (24) est en communication avec le canal d'entrée d'huile (21).

10. Dispositif de commande de soupape selon l'une quelconque des revendications 1 à 7, dans lequel le canal de drainage d'huile (22) est un orifice.

11. Moteur, comprenant le dispositif de commande de soupape selon l'une quelconque des revendications 1 à 10.
